(19) **Europäisches Patentamt**
**European Patent Office**
**Office européen des brevets**

(11) **EP 1 968 210 A1**

(12) **EUROPEAN PATENT APPLICATION**

(43) Date of publication:
**10.09.2008 Bulletin 2008/37**

(51) Int Cl.:
*H04B 7/08* (2006.01)   *H01Q 1/32* (2006.01)
*H01Q 9/16* (2006.01)

(21) Application number: **07004814.5**

(22) Date of filing: **08.03.2007**

(84) Designated Contracting States:
**AT BE BG CH CY CZ DE DK EE ES FI FR GB GR HU IE IS IT LI LT LU LV MC MT NL PL PT RO SE SI SK TR**

(71) Applicant: **Harman Becker Automotive Systems GmbH**
**76307 Karlsbad (DE)**

(72) Inventors:
• **Sliskovic, Maja, Dr.**
**76275 Ettlingen (DE)**

• **Schmauderer, Philipp**
**75339 Höfen (DE)**
• **Benz, Christoph**
**77797 Ohlsbach (DE)**

(74) Representative: **Grünecker, Kinkeldey, Stockmair & Schwanhäusser Anwaltssozietät**
**Leopoldstrasse 4**
**80802 München (DE)**

(54) **Roof antenna array for phase diversity system**

(57)    The present invention relates to a vehicle roof diversity antenna system for use on a vehicle. The vehicle roof diversity antenna system comprises at least two an- tenna elements, wherein at least one antenna element of the at least two antenna elements is parallel to a roof surface on top of the vehicle.

FIG. 2

EP 1 968 210 A1

## Description

### Field of the Invention

The invention generally relates to an antenna configuration for a phase diversity system, and in particular to an FM phase diversity system mounted on a vehicle.

### Technical Background

Diversity antenna reception and transmission schemes are becoming more usual in the communications world, especially in mobile wireless communications and automotive applications.

Diversity schemes are used to reduce multi-path interference, improve fringe area reception and therefore enhance sound quality. To achieve this, at least two antenna elements are needed in any diversity receiving system to improve reception quality. Apart from for polarization diversity, these antennas need to be a reasonable distance apart to reap the benefits of diversity reception. This means that a significant amount of space is needed and has to be made available for the antenna configuration.

This can create space issues, especially when FM phase diversity receiving antennas are to be mounted on a vehicle. The size and placement of the antenna have become an important factor in automobile antenna design because the antenna should be mounted on a limited area of the automobile body. A smaller size can improve the esthetics of a vehicle.

The commercial FM frequency band is from 65.9 - 108 MHz, for different regions worldwide. At these frequencies, the entire body of the car is on the order of a wavelength (approximately 3m). The entire vehicle structure strongly influences the performance of the automobile antenna. Antenna operating frequencies, input impedance, gain patterns, and polarization are the main design parameters for any antennas.

Currently FM phase diversity antenna configurations are mainly mounted in the rear window or the wing of mass-production vehicles. These positions have several disadvantages. Firstly, the vehicle itself may shadow the antennas and therefore reception is degraded. Also antennas in the rear window, wing or bumper have directional characteristics that can lead to a worse performance of the phase diversity receiving system. Also, if an antenna element should become faulty, the whole rear window would have to be replaced at considerable cost.

The current FM reception antennas mounted on the exterior of cars make the wind resistance of cars higher and can often easily be broken off. Caution has to be exercised especially in car washes.

Therefore a solution is sought that leaves the vehicle roof FM phase diversity antennas free of interference due to the structure of the vehicle, is unobtrusive and easily maintainable, does not change the physical slope of the vehicle and offers satisfactory performance.

### Summary of the Invention

The present invention has been made in consideration of the situation above and has as its object to improve FM reception in a vehicle while having unobtrusive antennas.

The object is solved by the subject matter of the independent claims. Advantageous embodiments of the invention are subject matters to the dependent claims.

To achieve this object, the present invention provides a vehicle roof diversity antenna system for use on a vehicle, the vehicle roof diversity antenna system comprising at least two antenna elements, wherein at least one antenna element of the at least two antenna elements is parallel to a roof surface on top of the vehicle.

According to an advantageous embodiment of the present invention that the at least two antenna elements are adapted to receive frequency modulated signals.

In an advantageous embodiment the at least two antenna elements are adapted to receive signals in the FM frequency range.

In a further advantageous embodiment the at least two antenna elements have a length of half a wavelength.

According to an advantageous embodiment the at least two antenna elements are adapted to receive phase diversity signals.

In another embodiment the at least two antenna elements are dipoles.

According to a further advantageous embodiment the at least two antenna elements are active antennas.

In another advantageous embodiment the at least one antenna element is attached to a roof rail.

In a variation the at least one antenna element is integrated in a roof rail.

In a further variation the roof rails are adapted to operate as antenna elements.

In a further advantageous embodiment the vehicle is a sports utility vehicle or an off-road vehicle or an estate car.

**Brief description of the Figures**

Further features and advantages will become apparent from the following, and more particular description of the various embodiments of the invention as illustrated in the accompanying drawings, wherein:

Figure 1 shows a vehicle with roof rails;

Figure 2 shows one embodiment of roof rails on a vehicle;

Figure 3 shows another embodiment of roof rails on a vehicle;

Figure 4 is a block diagram of phase diversity with two antennas; and

Figure 5 is a block diagram of phase diversity with N antennas.

**Detailed description of invention**

The following paragraphs will describe various embodiments of the invention including the general characteristics of a phase diversity antenna array on a vehicle, and illustrates further, alternative, configurations.

For exemplary purposes only, most of the embodiments are outlined in relation to an FM reception system, and the terminology used in the subsequent sections mainly relates to the FM broadcast terminology. However the terminology used and the description of the embodiments with respect to FM is not intended to limit the principles and ideas of the invention to such systems.

Also the detailed explanations given in the technical background section above are merely intended to better understand the mostly FM specific exemplary embodiments described in the following, and should not be understood as limiting the invention to the described specific implementations of functions in an FM system.

Phase diversity technology is based on a fact that fading of received signal at each antenna element is independent of each other.

The key part of the phase diversity is that the signal at each antenna element is independent of each other because the signal at each antenna element consists of a large number of signals. This is because the interfering terms consist of M-1 terms of which the incident angles are all independent such that the magnitude of the received signal at each element, which is determined by a vector sum of M signal components, must be determined in a random fashion.

When the phase of the received diversity signal changes due to the multipath environment, a combination of the diversity signals has the best characteristics.

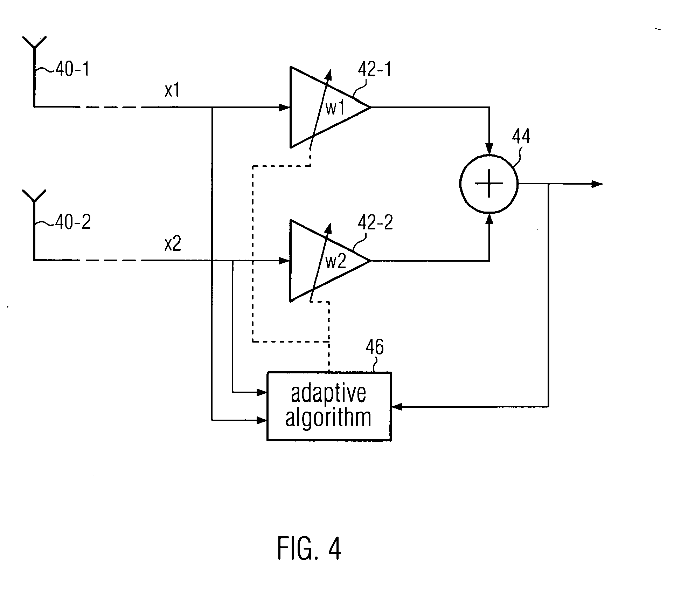

A phase diversity system combines baseband signals or IF (intermediate frequency) signals received by two or more antennas 40_1, 40_2 .. 40_N. In Figure 4, an example of a phase diversity system with two antennas 40_1, 40_2 is shown. Both phase and amplitude or only the phases of signals x1 and x2 are adaptively changed.

Figure 4 illustrates only the principle of phase diversity and one of the possible implementations. It is not the only possible solution: phase rotation and amplitude amplification/attenuation of signals x1 and x2 can be performed either in the analog or in the digital domain. A possible implementation is to multiply x1 and x2 with complex weighting factors w1 and w2 respectively as shown in Eq.1, i.e.:

$$w1 = a1 + j*b1, \text{ and } w2 = a2 + j*b2. \qquad \text{(Eq.1)}$$

As can be seen in Fig. 4 the signal is received by antennas 40_1 and 40_2 and combined in adder 44 after being weighted in weighting sections 42_1 and 42_2. The weighting of signals x1 and x2 is ascertained by feedback from after adder 44 and from the received signals x1 and x2 in an adaptive algorithm section 46.

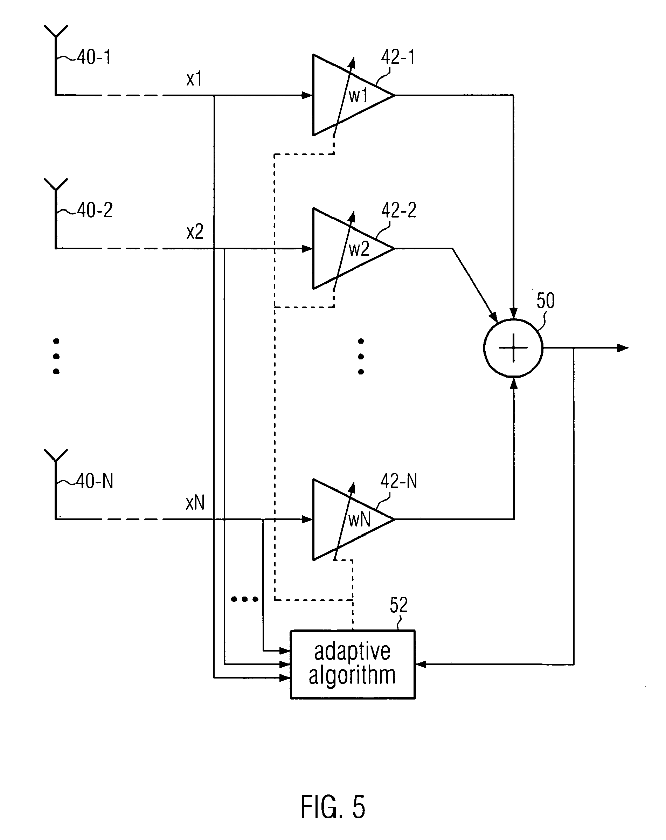

In Figure 5, the principle of phase diversity with N antennas 40_1, 40_2 .. 40_N is illustrated. Similarly to the two antenna case illustrated in Fig. 4, Fig. 5 shows the case with N antennas 40_1 .. 40_N. Each of the received signals x1 .. xN is weighted in a weighting section 42_1 .. 42_N before being combined in adder 50. The weighting depends on the feedback from adder 50 and the received signals x1 .. xN and is set by adaptive algorithm section 52.

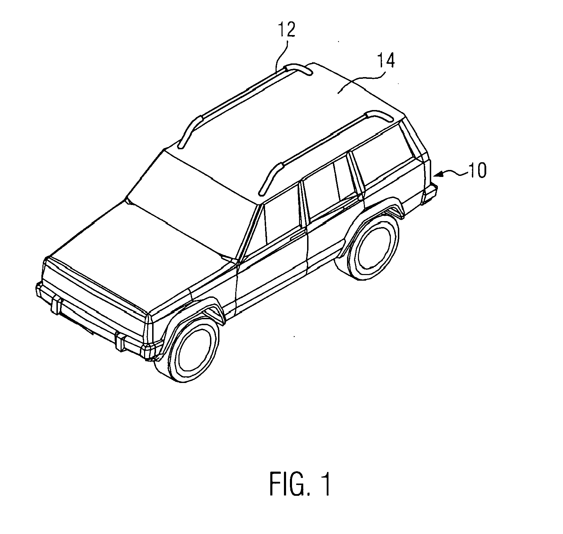

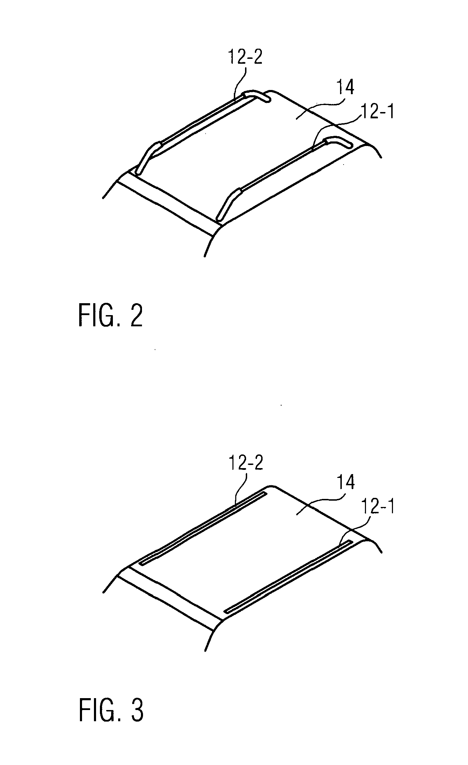

Many of today's cars, such as Sports Utility Vehicles (SUVs) 10, hatchbacks and vans, have two roof railings 12, as shown in Fig. 1. These are a reasonable distance apart as well as parallel to each other and the car roof 14, as visible in Fig. 2.

In one embodiment of the present invention at least one antenna is attached to the left roof railing 12_1 and at least another antenna is attached to the right 12_2 roof railing to provide an antenna diversity reception system.

In another embodiment of the present invention at least one antenna is integrated in the left roof railing and at least another antenna is integrated in the right roof railing to provide an antenna diversity reception system.

In both of the embodiments above the antennas are spatially separated further than in the current mass produced vehicles with the antennas in the rear window. This separation of about half a wavelength at FM is an advantage in phase diversity systems, as explained above. Also the coupling between the two antenna elements is less in the present invention than when the antennas are closer to each other, as in the case of having the antenna elements integrated in the rear window.

In another embodiment of the present invention, one antenna element is attached to or integrated in one of the roof railings, whereas the other antenna element can be in one of the usual places, such as integrated in the rear view window. The two antenna elements then still have a large enough separation to allow for phase diversity.

In a further embodiment of the invention the attachment of the at least one antenna to the roof rails can be carried out by fastening the antenna elements to the rails by adhesive.

In another embodiment of the invention the antenna elements are fastened to the roof rails by mechanical means, such as straps, or bolting or screwing them thereto.

In a further embodiment of the invention the antenna is an active antenna.

In another embodiment of the invention the antenna is a passive antenna.

Alternatively, rather than integrating the antennas in the roof rails, in a further embodiment of the invention the roof rails are antenna elements themselves. This can be achieved by making the roof rails from the appropriate material, such as aluminium.

The advantages of having the phase diversity reception antennas attached to, integrated in or as roof rails are a reduced mass, it complements the vehicle styling, elimination of loss or theft of antennas and elimination of antenna wind noise.

**Claims**

1. A vehicle roof diversity antenna system for use on a vehicle (10), the vehicle roof diversity antenna system comprising:

   at least two antenna elements;

   wherein at least one antenna element of the at least two antenna elements is parallel to a roof surface (14) on top of the vehicle.

2. The vehicle roof diversity antenna system of claim 1, wherein the at least two antenna elements are adapted to receive frequency modulated signals.

3. The vehicle roof diversity antenna system of claim 1 or 2, wherein the at least two antenna elements are adapted to receive signals in the FM frequency range.

4. The vehicle roof diversity antenna system of any of claims 1 to 3, wherein the at least two antenna elements have a length of half a wavelength.

5. The vehicle roof diversity antenna system of any of claims 1 to 4, wherein the at least two antenna elements are adapted to receive phase diversity signals.

6. The vehicle roof diversity antenna system of any of claims 1 to 5, wherein the at least two antenna elements are dipoles.

7. The vehicle roof diversity antenna system of any of claims 1 to 6, wherein the at least two antenna elements are active antennas.

8. The vehicle roof diversity antenna system of any of claims 1 to 7, wherein the at least one antenna element is attached to a roof rail (12).

9. The vehicle roof diversity antenna system of any of claims 1 to 7, wherein the at least one antenna element is integrated in a roof rail (12).

10. The vehicle roof diversity antenna system of any of claims 1 to 7, wherein roof rails are adapted to operate as antenna elements.

11. The vehicle roof diversity antenna system of any of claims 1 to 10, wherein the vehicle (10) is a sports utility vehicle or an off-road vehicle or an estate car.

12. A vehicle with the vehicle roof diversity antenna system of any of claims 1 to 11.

13. A vehicle roof rail system adapted to act as the at least two antenna elements of claims 1 to 7.

14. A vehicle roof rail system being adapted to have the vehicle roof diversity antenna system of claims 1 to 8 fastened to it.

FIG. 1

12-2

14

12-1

FIG. 2

12-2

14

12-1

FIG. 3

FIG. 4

FIG. 5

**European Patent Office**

**EUROPEAN SEARCH REPORT**

Application Number

EP 07 00 4814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 38 02 130 A1 (HIRSCHMANN RADIOTECHNIK [DE]) 3 August 1989 (1989-08-03) * the whole document * ----- | 1-14 | INV. H04B7/08 H01Q1/32 H01Q9/16 |
| X | JP 07 263928 A (AISIN SEIKI) 13 October 1995 (1995-10-13) | 1-9,11, 12,14 | |
| Y | * abstract; figures 1-6 * ----- | 10,13 | |
| X | EP 0 987 789 A1 (MATSUSHITA ELECTRONICS CORP [JP] MATSUSHITA ELECTRIC IND CO LTD [JP]) 22 March 2000 (2000-03-22) | 1-9,11, 12,14 | |
| Y | * the whole document * ----- | 10,13 | |
| Y | FR 1 138 609 A (ALBERT CURATEAU) 17 June 1957 (1957-06-17) | 10,13 | |
| A | * the whole document * ----- | 1-9,11, 12,14 | |
| X | US 2007/013594 A1 (YEGIN KORKUT [US] ET AL) 18 January 2007 (2007-01-18) * the whole document * ----- | 1-14 | TECHNICAL FIELDS SEARCHED (IPC) |
| A | US 5 457 467 A (SCHENKYR DIETER [DE] ET AL) 10 October 1995 (1995-10-10) * the whole document * ----- | 1-14 | H01Q H04B |

The present search report has been drawn up for all claims

| Place of search | Date of completion of the search | Examiner |
|---|---|---|
| The Hague | 13 April 2007 | Fredj, Aziz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 4814

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2007

| Patent document cited in search report | | Publication date | Patent family member(s) | | Publication date |
|---|---|---|---|---|---|
| DE 3802130 | A1 | 03-08-1989 | NONE | | |
| JP 7263928 | A | 13-10-1995 | NONE | | |
| EP 0987789 | A1 | 22-03-2000 | WO | 9950932 A1 | 07-10-1999 |
| | | | US | 6362784 B1 | 26-03-2002 |
| FR 1138609 | A | 17-06-1957 | NONE | | |
| US 2007013594 | A1 | 18-01-2007 | NONE | | |
| US 5457467 | A | 10-10-1995 | DE | 4003385 A1 | 08-08-1991 |
| | | | WO | 9111830 A1 | 08-08-1991 |
| | | | EP | 0514380 A1 | 25-11-1992 |
| | | | ES | 2068567 T3 | 16-04-1995 |
| | | | FI | 923511 A | 04-08-1992 |
| | | | JP | 5508270 T | 18-11-1993 |

For more details about this annex : see Official Journal of the European Patent Office, No. 12/82